# FASCICULE DE BREVET EUROPEEN

(11) **EP 0 915 811 B1**
(45) Date de publication et mention de la délivrance du brevet: **14.07.2004**
(21) Numéro de dépôt: 98925743.1
(22) Date de dépôt: 19.05.1998
(51) Int. Cl.: C03B 3/00, C03B 7/02, C03B 5/173

(54) **PROCEDE ET DISPOSITIF DE RECYCLAGE DE DECHETS DANS UNE FABRICATION DE FIBRES MINERALES**
VERFAHREN UND VORRICHTUNG ZUR RÜCKGEWINNUNG VON ABFALL BEI DER MINERALFASERHERSTELLUNG
METHOD AND DEVICE FOR WASTE RECYCLING IN A MINERAL FIBRE MANUFACTURING PLANT

(30) Priorité: 28.05.1997 IT MI971255
(43) Date de publication de la demande: 19.05.1999
(73) Titulaire: SAINT-GOBAIN ISOVER, 92400 Courbevoie (FR)
(72) Inventeur: BURG, Daniel, I-20135 Milano (IT); COLPANI, Giovanni, I-24058 Romano di Lombardia (IT)
(74) Mandataire: Cardin, Elise
(86) Numéro de dépôt international: PCT/FR1998/000996
(87) Numéro de publication internationale: WO 1998/054101

(56) Documents cités:
- DE-A- 3 535 792
- FR-A- 1 161 757
- FR-A- 1 231 575
- GB-A- 2 027 690
- US-A- 3 429 684
- US-A- 3 627 504
- US-A- 3 721 540
- US-A- 5 352 258

## Description

L'invention concerne les techniques de fabrication de fibres minérales et, plus précisément, le recyclage de déchets dans les installations de fabrication.

Dans la vie industrielle moderne, le souci écologique et celui de la protection de l'environnement incitent à rechercher par tous les moyens à recycler les déchets de toutes natures. Chaque industrie cherche ainsi à recycler ses propres déchets mais également, d'une manière générale, tous les déchets quelle qu'en soit l'origine.

L'industrie des fibres minérales, notamment celle des laines principalement destinées à l'isolation, laine de verre ou laine de roche, produit des déchets aux différentes étapes de fabrication. Il est important de pouvoir recycler ces déchets par une opération qui peut s'intituler « autorecyclage ». Mais, par ailleurs, il peut être utile de recycler également des déchets d'autres origines et même certains qui ne contiennent pas du tout de fibres minérales. Il s'agit alors de ce qu'on peut appeler un « hétérorecyclage ».

Industriellement, les matelas de laines destinées principalement à l'isolation sont obtenus par un procédé en deux phases, production des fibres proprement dites par étirage et figeage d'une matière vitreuse en fusion dans un premier temps puis, association d'un très grand nombre de fibres qui sont réunies pour constituer un matelas. Entre les deux phases, les fibres de verre ou de roche sont arrosées d'un liant qui sera polymérisé à l'issue de la deuxième phase. Une fois le matelas terminé, il reste à finir l'élaboration pour constituer un produit prêt à l'emploi. En particulier, on doit découper les bords longitudinaux du ruban pour qu'ils soient bien nets. Cette opération produit un résidu, les rives du matelas, qu'on désire réutiliser. De même, certaines chutes résultant de l'exploitation ultérieure des panneaux ou des rouleaux constituent des sous-produits qu'il est intéressant de pouvoir recycler. Il s'agit, par exemple, de panneaux avec des parements divers, voile de verre, papier Kraft, films plastiques, etc. Ces panneaux n'ont pas été jugés conformes à la qualité requise et ont été rebutés au contrôle en bout de ligne ou bien même ils ont été retournés par un client insatisfait.

Il existe différentes techniques pour recycler les déchets d'origines diverses lors de la fabrication de laines minérales. Elles se distinguent par le moment de la fabrication auquel les déchets sont introduits.

Les procédés de fabrication de laines minérales se regroupent en deux familles, la production de laine de verre et la production de laine dite « de roche ». Dans le premier procédé, les matières premières qui constituent une composition verrière, essentiellement un mélange d'oxydes, sont chauffées dans un four dans des conditions bien maîtrisées puis la matière vitreuse en fusion est dirigée sur une machine à centrifugation, par exemple celle décrite dans le brevet EP-B-0 091 866 où les fibres unitaires sont engendrées. L'élaboration de la matière vitreuse en fusion destinée à la production de laine de roche se fait en général de manière tout à fait différente. Les matières premières (roches diverses comme le basalte ou laitiers de hauts-fourneaux) sont introduites simultanément avec un carburant (du charbon) par le haut d'un cubilot. Lors de leur descente, elles fondent et s'homogénéisent. En bas, on recueille la matière vitreuse en fusion. Elle est conduite à une machine de fibrage telle que celle dite « à centrifugation externe » décrite, par exemple, dans la demande de brevet EP-A-0 059 152. Cette machine engendre aussi des fibres minérales unitaires.

La méthode la plus utilisée pour réintroduire des déchets est pratiquée au moment où les fibres unitaires sont rassemblées pour être associées grâce à une résine et constituer un matelas. Dans le deuxième procédé évoqué ci-dessus qui utilise en général une seule source de fibres, les chutes ont la forme de flocons et sont injectées dans la hotte de réception, les flocons sont aspirés en même temps que les fibres neuves sur le convoyeur qui est un tapis perforé où le premier matelas se forme. Dans l'autre procédé qui utilise, en série, plusieurs unités de production de fibres, deux techniques ont été employées, soit l'introduction des chutes en forme de flocons au-dessus du convoyeur, entre deux têtes de production de fibres, soit - selon la technique décrite dans la demande de brevet FR-A-2 559 793 - directement dans l'une ou plusieurs des hottes de réception.

La quantité de matériaux à recycler qu'il est possible de réintroduire dans les hottes de réception d'une ligne de production de laine minérale est variable ; elle dépend, en particulier, des masses volumiques respectives du produit fabriqué et du produit à recycler. Elle dépend aussi du marché auquel est destiné le produit en cours de fabrication. Quoi qu'il en soit, les quantités qu'on peut introduire sont trop faibles pour absorber tous les déchets qu'on voudrait pouvoir recycler, ne serait-ce que ceux à base de fibres minérales.

Une autre technique pratiquée pour le recyclage de déchets consiste à les réintroduire parmi les matières premières. Les techniques sont différentes selon qu'il s'agit d'un four verrier (laine de verre) ou d'un cubilot (laine de roche). Dans le premier cas, les déchets sont introduits tels quels parmi les matières premières. Le four est généralement un four électrique dont la surface est entièrement recouverte des matières premières pulvérulentes. La demande de brevet FR-A-2 199 856 propose, entre autres, de compenser l'effet réducteur dû à la combustion des matières organiques par l'ajout de sulfates ou de nitrates. il est en effet connu que l'addition de laines minérales avec leur liant à un bain de matières vitreuses en fusion perturbe de manière importante l'élaboration du verre. Il se produit des mousses, des croûtes qui sont très gênantes et perturbent le fibrage.

Dans le brevet US-A-4 422 862, on propose de déposer les déchets de verre à la surface des matières premières de manière que les gaz du four provoquent la combustion des liants. Cette technique astucieuse n'est pas très sûre car la couverture de matières premières pulvérulentes n'est pas uniforme et là où elle est mince, ou a fortiori, là où elle manque, les déchets tombent immédiatement dans le four avec les inconvénients cités : on constate une perturbation incontrôlable de la délicate chimie qui se produit lors de l'élaboration du verre. D'autre part, lorsque la couverture de matières premières est épaisse, elle isole fortement les déchets qu'on y dépose et la combustion des liants n'est pas garantie.

Dans les cubilots utilisés pour produire la matière vitreuse fondue destinée à la production de laines de roche, il est habituel d'introduire des matières premières pulvérulentes en les agglomérant tout d'abord sous forme de briquettes. Cette technique est également utilisée pour recycler des déchets pulvérulents récupérés dans les fumées qui sortent du cubilot et on l'utilise de même pour recycler des déchets à base de fibres minérales. La fabrication de briquettes est une technique assez chère et on essaye d'en limiter l'usage aux cas où c'est la seule technique disponible. Il serait intéressant de disposer d'une technique qui permette un recyclage direct des déchets sans avoir besoin de faire appel à une opération intermédiaire supplémentaire comme la fabrication de briquettes.

Il existe une dernière technique de recyclage de déchets fibreux qui s'apparente à la réintroduction au niveau des matières premières, il s'agit de la technique dite OXYMELT. Elle consiste à utiliser les résidus à base de fibres minérales pour en faire un verre qui sera joint aux matières premières comme s'il s'agissait de calcin ordinaire. On fait brûler dans de l'oxygène le liant et les autres résidus organiques des déchets puis on fait fondre les matières fibreuses à l'aide d'un brûleur. Après refroidissement, le verre obtenu peut être joint aux autres matières premières et recyclé. Le bilan énergétique de cette opération n'est pas favorable car on n'obtient que du verre froid qu'il faudra refondre.

Il existe également dans la fabrication de la laine de roche à partir d'un cubilot une méthode de recyclage de déchets au cours de l'élaboration du verre. Il s'agit de la réintroduction de déchets dans un brûleur à la base du cubilot. C'est à ce niveau qu'est introduit le gaz comburant qui va se combiner au carbone en fournissant la chaleur qui fera fondre les roches. La demande de brevet EP-A-0 611 212 décrit une telle méthode où les déchets réduits en poudre sont introduits par simple gravité dans un conduit qui relie la « boîte à vents » du cubilot et l'intérieur de celui-ci. Cette méthode très efficace nécessite cependant une préparation des déchets puisqu'ils doivent être réduits en fragments très petits pour être entraînés facilement dans des canalisations de section réduite.

Le document US-A-3 721 540 décrit un dispositif pour ajouter des particules solides dans du verre fondu, qui comprend une zone d'introduction montée sur le canal de distribution du verre d'alimentation et qui comprend des blocs réfractaires avant et arrière définissant une zone isolée dans laquelle les particules sont déchargées.

L'invention se donne pour tâche de substituer aux méthodes de recyclage des déchets précédentes, une technique plus simple, plus économique et qui permette le recyclage de quantités de déchets importantes.

L'invention propose un procédé pour le recyclage de déchets dans une installation de production de laine minérale par une technique de fibrage d'une matière vitreuse fondue, cette installation comportant au moins un canal de distribution de ladite matière vitreuse dans lequel les déchets sont constitués de matières dont la température de volatilisation, ou de combustion, ou de fusion est au plus égale à la température de fusion de la laine minérale, et constituent des fragments qui sont introduits dans le canal de distribution.

Le procédé de l'invention fournit, partout où il existe un cheminement de la matière vitreuse fondue entre son lieu d'élaboration (four ou cubilot) et la machine de fibrage, une solution élégante au problème du recyclage des déchets et spécialement de ceux à base de laines minérales.

De préférence, l'introduction dans le canal s'effectue dans une zone où la température de la matière vitreuse est d'au moins 1000°C.

De même, les fragments de déchets ont des dimensions au maximum de 10 cm et, avantageusement, la proportion pondérale des déchets recyclés est de l'ordre de 4 %.

On voit que les conditions de mise en oeuvre de l'invention sont très avantageuses et faciles à réaliser.

L'invention propose également un dispositif pour la mise en oeuvre du procédé de l'invention qui comporte une hotte installée dans la partie amont du canal, hotte qui est équipée d'un système d'alimentation séparateur de pression.

Dans une variante, le système d'alimentation utilise les déchets eux-mêmes pour séparer les pressions et, dans une autre, comporte un sas, notamment équipé de registres.

Avantageusement, le dispositif de l'invention comporte une cheminée installée sur le canal.

On voit que les éléments du dispositif sont particulièrement simples, bon marché et faciles à mettre en oeuvre.

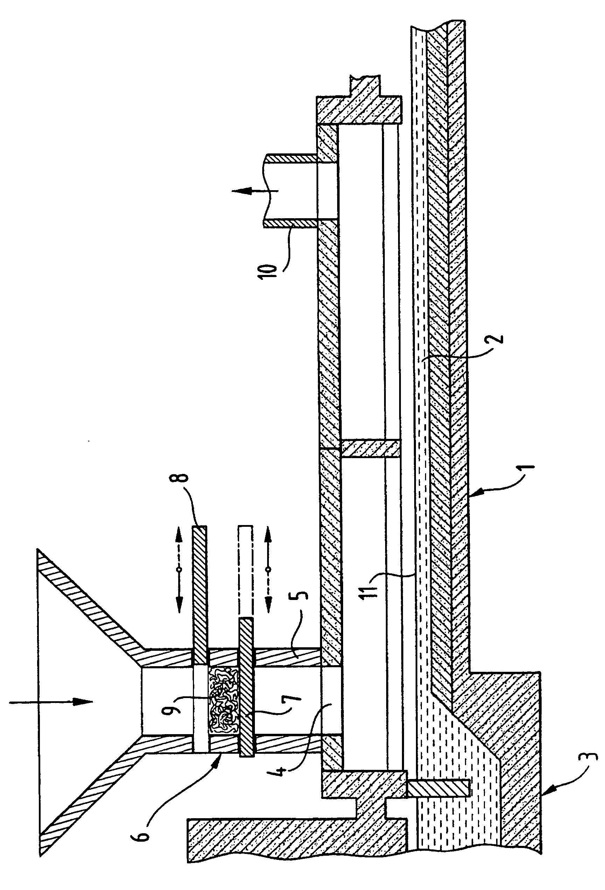

La **figure unique** et la description permettront de comprendre le fonctionnement de l'invention et d'en saisir tous les avantages.

La **figure** montre, schématiquement, l'avant-corps d'un four verrier destiné, notamment, à la fabrication de fibres minérales.

On parle dans la présente description de four faisant partie d'une installation de production de laine minérale obtenue par une technique de fibrage d'une matière première fondue, en effet, une telle installation produit immédiatement lors de la fabrication des matelas ou, ultérieurement, lors de leur mise en oeuvre, des déchets comportant des fibres minérales à recycler, mais un four verrier avec un avant-corps, destiné par exemple à la fabrication de bouteilles pourrait de la même manière être équipé du dispositif de l'invention pour mettre en oeuvre le procédé.

L'avant-corps 1 de la **figure**, qu'on appelle aussi canal de distribution ou feeder, est destiné à conduire la matière vitreuse fondue 2 depuis le four 3 où les matières premières sont fondues et le verre élaboré, jusqu'aux machines de formage comme des machines de fibrage où le produit fini, notamment le matelas fibreux, est constitué.

Dans le canal de distribution, la température de la matière vitreuse fondue n'est pas la même partout. Dans la production de laine de verre, en tête du canal, la température est supérieure à 1200°C et, en aval, elle a, en général, baissé d'environ 200°C. Pour maintenir ces températures, selon les installations et les tirées, il peut être nécessaire d'apporter de l'énergie thermique, éventuellement par des flammes, mais en général par effet Joule grâce à des électrodes plongeant dans le verre fondu.

Pour procéder aux essais de recyclage de déchets, on a modifié le canal de distribution. En amont, près de la sortie du four, on a créé dans la voûte du canal au-dessus de la surface 11 du verre fondu 2, une ouverture 4 de 50 x 50 cm. Dans un premier temps, cette ouverture se prolongeait simplement par un conduit vertical 5 en briques réfractaires qui restait ouvert et constituait une sorte de hotte.

C'est en passant par le conduit 5 qu'on a introduit des déchets, principalement déchets de fibres minérales, dans différentes conditions.

On a tout d'abord commencé par introduire des fragments arrachés à des matelas de laine de verre de type TELSTAR, un produit ISOVER SAINT-GOBAIN. Ces fragments avaient, au maximum, leur plus grande dimension de l'ordre de 10 cm. Le premier essai pour faire entrer les fragments dans le canal en la faisant transiter par le conduit 5 a échoué : un fort courant ascendant de gaz chauds empêchait les fragments de descendre.

Au cours du deuxième essai, les fragments identiques aux précédents ont été mouillés à l'eau avant d'être introduits par l'ouverture 4. Cette fois, les fragments lestés n'ont pas été refoulés. En observant leur comportement par des regards pratiqués dans les parois du canal, on a constaté qu'en s'approchant du bain de verre, les fragments s'enflammaient, qu'ils flottaient sur le bain en continuant à flamber puis que, progressivement, ils disparaissaient en se diluant dans le bain en fusion. Malgré cet apport de matière étrangère, le fibrage du verre par la technique TEL (identique à celle du brevet EP-B-0 091 866) s'est fait naturellement sans aucune perturbation.

Un deuxième essai a eu lieu après modification du dispositif d'enfournement. On a réalisé un sas à l'entrée de la hotte pour constituer un système d'alimentation séparateur de pression. Le sas 6 est installé dans le conduit 5, il est limité par les parois de celui-ci et par deux registres 7, 8 superposés qui peuvent fermer l'ouverture. Le principe du dispositif est d'avoir toujours l'un des registres 7 ou 8 fermé. On introduit donc des charges de déchets 9 de manière discontinue.

Les opérations se déroulent de la manière suivante : le registre inférieur 7 étant fermé, on introduit au-dessus des fragments de déchets pour constituer une charge 9. On ferme alors le registre supérieur 8 et on évacue la charge grâce à l'ouverture du registre inférieur 7.

Grâce à ce dispositif, les courants ascendants de gaz sont supprimés et il devient possible d'introduire tous les déchets quelle qu'en soit la masse volumique.

Le dispositif précédent a permis d'introduire des déchets de toutes natures et, ainsi, de procéder à des essais systématiques. On a constaté :
- qu'il est possible de « digérer » des déchets de natures très diverses,
- que les déchets secs ou humides sont absorbés de la même manière,
- que des quantités importantes peuvent être assimilées sans perturber l'aval de la ligne, c'est-à-dire sans qu'on le remarque au niveau du fibrage. En particulier, les problèmes d'oxydoréduction qu'on constatait lorsqu'on introduisait les déchets dans le bain de verre au niveau du four n'existent pas ici.

A la fin des essais, deux modifications ont été apportées à l'installation. D'une part, on a installé une cheminée et, d'autre part, un bouillonneur.

La cheminée, schématisée en 10 sur la **figure**, a pour fonction d'évacuer les gaz produits par le chauffage et/ou la combustion des matières organiques contenues dans les déchets et notamment les liants ou les ensimages des fibres minérales. La cheminée, réalisée de manière classique, en briques réfractaires aboutit à une installation de traitement des fumées. Celles-ci sont ensuite, lorsqu'elles sont inoffensives, libérées dans l'atmosphère.

L'autre accessoire installé sur le canal de distribution s'est avéré utile lors de l'exploitation de déchets humides. On a en effet constaté qu'ils descendent plus vite dans le bain de verre et, qu'ainsi, ils modifient le courant de verre fondu. En recueillant le verre en masse à l'extrémité du canal, on a constaté qu'au lieu d'être bien homogène, lorsqu'on alimente avec des déchets humides, le verre est strié : il présente des zones d'indice de réfraction différent. Ces hétérogénéités peuvent conduire à des dispersions dans la qualité des fibres de verre unitaires constituant le matelas. L'homogénéité du bain de verre a pu être rétablie en utilisant un bouillonneur (non représenté sur la figure). Il s'agit d'un tube en métal réfractaire, en platine par exemple, qui plonge dans le bain de verre de haut en bas et au travers duquel on insuffle du gaz. Le bouillonnement produit des mouvements dans la masse du verre liquide qui l'homogénéisent.

Dans le cas des déchets de laine minérale, l'utilisation du bouillonneur ne s'impose en général que si les déchets sont mouillés.

Un autre système pour l'introduction de déchets, différent du sas de la figure avec ses deux registres 7, 8 a été utilisé. Il s'agissait d'une vis d'Archimède à axe horizontal. Ce dispositif est l'un de ceux du document EP-A-0 611 212. Ce document présente des techniques où ce sont les produits à introduire eux-mêmes qui séparent les pressions, c'est-à-dire que ce sont eux, en masse compacte, qui constituent un bouchon qui supporte la différence de pression entre les deux milieux en amont et en aval. La vis d'Archimède avec son axe sensiblement horizontal est tout à fait applicable pour des déchets fibreux. L'utilisation du dispositif vertical avec vibreur, décrit également dans EP-A-0 611 212, est plus délicate à cause de la faible densité des fragments à introduire.

Le dispositif de l'invention avec ses différentes variantes qui vient d'être décrit a été utilisé pour déterminer les limites du procédé de l'invention.

On a d'abord varié la nature des produits recyclés, essentiellement laine de verre, laine de roche, toutes deux obtenues par centrifugation ou voile de verre dont les fibres sortent des filières et qui est également structuré par un liant. Tous ces produits sont recyclables facilement par le procédé de l'invention.

On a ensuite accru la quantité de déchets fibreux introduits (autorecyclage). On a pu atteindre et même dépasser pendant de longues durées (plusieurs heures) des taux de 4 %, c'est-à-dire que sur un canal qui débitait des quantités de verre fondu comprises entre 80 et 85 tonnes par jour, on a introduit des taux de déchets de laine de verre de 140 kg/heure et cela en permanence. Aucune perturbation n'a été constatée dans la qualité de la laine de verre obtenue. Pendant ces essais, les déchets étaient des fragments arrachés à des matelas de laine de verre TELSTAR. Leur composition était de 93 % de verre et 7 % de liant organique.

La limite du procédé est due à la quantité de verre « à digérer ». C'est-à-dire que même si les déchets sont mouillés par exemple, la limite est celle du taux de verre à intégrer au verre en fusion. L'eau contenue dans le produit ne joue aucun rôle dans la limite.

L'installation décrit plus haut a permis de faire des bilans énergétiques. Ceux-ci sont intéressants pour pouvoir, en fonction de la nature des déchets introduits, ajuster les apports de chaleur à l'avant-corps pour avoir toujours en sortie un verre à la même température.

Les matières organiques, essentiellement le liant, contenues dans les déchets de laine minérale, fournissent, lors de leur combustion, des calories au milieu. En revanche, il faut de l'énergie pour fondre le verre des fibres et l'amener à la température du verre en fusion dans l'avant-corps. D'un autre côté, l'eau doit être chauffée puis vaporisée. Les calculs et leur vérification pendant les essais ont montré que le bilan est neutre pour la laine de verre sèche : ni apport ni consommation d'énergie ; il est positif pour le voile de verre qui fournit plus d'énergie qu'il n'en consomme (800 kWh/t de déchets) mais, en revanche, la laine de verre humide consomme de l'énergie (de l'ordre de 100 kWh par tonne de déchets).

Le bilan économique de la réintroduction des déchets de laine de roche ou de voile de verre dans le canal de distribution est très intéressant lorsqu'on le compare aux autres techniques. On a vu qu'ici le bilan énergétique est ou bien neutre ou bien fortement positif ou, éventuellement, légèrement négatif. Les autres coûts sont ou bien identiques à ceux des autres méthodes (déchiquetage et manutention) ou bien inexistants.

Seule la méthode de réintroduction dans la réception des fibres unitaires présente un bilan comparable. La méthode de réintroduction dans les matières premières nécessite, on l'a vu, de compenser l'apport de réducteur (le liant) par un oxydant tel qu'un sulfate ou un nitrate ce qui n'est pas gratuit.

Avec les cubilots, la fabrication des briquettes est une opération chère qui est souvent faite ailleurs que sur le lieu de production.

La technique OXYMELT fournit comme produit un verre froid et pour le réchauffer et le fondre, il faudra dépenser de la chaleur.

La description qui précède a été faite autour d'un four verrier avec un avant-corps conduisant à des machines de fibrage comme celles du procédé TEL décrit notamment dans le brevet EP-B-0 091 866, mais tout ce qui a été dit s'applique aussi bien à d'autres techniques de fabrication de laines minérales, comme par exemple celles qui utilisent un cubilot et la centrifugation externe de laine de roche telle qu'elle est décrite notamment dans le brevet EP-B-0 059 152 dans la mesure simplement où le verre en fusion transite dans un canal avant d'arriver à la machine de fibrage. Un tel canal est décrit, par exemple, dans la demande de brevet FR-A-2 572 390.

## Revendications

1. Procédé pour le recyclage de déchets (9) dans une installation de production de laine minérale par une technique de fibrage d'une matière vitreuse fondue, cette installation comportant au moins un canal de distribution (1) de ladite matière vitreuse, **caractérisé en ce que** les déchets (9) sont constitués de matières dont la température de volatilisation, ou de combustion, ou de fusion est au plus égale à la température de fusion de la laine minérale, et constituent des fragments qui sont introduits dans le canal de distribution (1).

2. Procédé selon la revendication 1, **caractérisé en ce que** les déchets (9) sont à base de laine minérale.

3. Procédé selon la revendication 1 ou la revendication 2, **caractérisé en ce que** l'introduction dans le canal (1) s'effectue dans une zone où la température de la matière vitreuse est d'au moins 1000°C.

4. Procédé selon l'une des revendications précédentes, **caractérisé en ce que** les fragments de déchets (9) ont des dimensions au maximum de 10 cm.

5. Procédé selon l'une des revendications précédentes, **caractérisé en ce que** la proportion pondérale des déchets recyclés (9) est de l'ordre de 4 %.

6. Dispositif pour le recyclage des déchets (9) dans une installation de production de laine minérale par une technique de fibrage d'une matière vitreuse fondue, cette installation comportant au moins un canal de distribution (1) de ladite matière vitreuse, le dispositif comportant une hotte (5) installée dans la partie amont du canal, cette hotte étant équipée d'un système d'alimentation séparateur de pression, **caractérisé en ce que** le système d'alimentation comporte un sas (6), notamment équipé de registres (7, 8).

7. Dispositif pour le recyclage des déchets (9) dans une installation de production de laine minérale par une technique de fibrage d'une matière vitreuse fondue, cette installation comportant au moins un canal de distribution (1) de ladite matière vitreuse, le dispositif comportant une hotte (5) installée dans la partie amont du canal, cette hotte étant équipée d'un système d'alimentation séparateur de pression, **caractérisé en ce que** le moyen séparateur de pression est constitué par les déchets (9) eux-mêmes.

8. Dispositif selon la revendication 6 ou la revendication 7, **caractérisé en ce qu'il** comporte une cheminée (10) installée sur le canal (1).

9. Dispositif selon l'une des revendications 6 à 8, **caractérisé en ce qu'il** est équipé d'au moins un bouillonneur.

## Patentansprüche

1. Verfahren für die Wiederverwertung von Abfällen (9) in einer Produktionseinrichtung für Mineralwolle durch Zerfaserung eines geschmolzenen glasartigen Materials, wobei diese Einrichtung mindestens einen Verteilerkanal (1) für das glasartige Material enthält, **dadurch gekennzeichnet, daß** die Abfälle (9) aus Materialien bestehen, deren Verflüchtigungs-, Verbrennungs- oder Schmelztemperaturen höchstens der Schmelztemperatur der Mineralwolle entsprechen, und aus Fragmenten bestehen, welche in den Verteilerkanal (1) eingeführt werden.

2. Verfahren nach Anspruch 1, **gekennzeichnet, durch** Abfälle (9) auf der Basis von Mineralwolle.

3. Verfahren nach Anspruch 1 oder Anspruch 2, **dadurch gekennzeichnet, daß** die Einführung in den Kanal (1) in einer Zone erfolgt, in der die Temperatur des glasartigen Materials mindestens 1000°C beträgt.

4. Verfahren nach einem der vorangegangenen Ansprüche, **dadurch gekennzeichnet, daß** die Fragmente des Abfalls (9) maximale Abmessungen von 10 cm aufweisen.

5. Verfahren entsprechend einem der vorhergehenden Ansprüche, **dadurch gekennzeichnet, daß** der Gewichtsanteil des wiederverwerteten Abfalls (9) in der Größenordnung von 4% liegt.

6. Vorrichtung für die Wiederverwertung von Abfällen (9) in einer Produktionseinrichtung für Mineralwolle durch Zerfaserung eines geschmolzenen glasartigen Materials, wobei diese Einrichtung mindestens einen Verteilerkanal (1) für das glasartige Material aufweist, wobei die Vorrichtung einen Aufsatz (5) enthält, welcher in dem stromaufseitigen Abschnitt des Kanals eingebaut ist, wobei dieser Aufsatz mit einem getrennten Druckversorgungssystem ausgestattet ist, **dadurch gekennzeichnet, daß** das Versorgungssystem eine Luftschleuse (6) aufweist, welche insbesondere mit Schiebern (7, 8) ausgestattet ist.

7. Vorrichtung für die Wiederverwertung von Abfällen (9) in einer Produktionseinrichtung für Mineralwolle durch eine Zerfaserung eines geschmolzenen glasartigen Materials, wobei diese Einrichtung mindestens einen Verteilerkanal (1) für das glasartige Material aufweist, wobei die Vorrichtung einen Aufsatz (5) enthält, welcher in dem stromaufseitigen Abschnitt des Kanals eingebaut ist, wobei dieser Aufsatz mit einem getrennten Druckversorgungssystem ausgestattet ist, **dadurch gekennzeichnet, daß** die Drucktrennungseinrichtung aus den Abfällen (9) selbst besteht.

8. Vorrichtung nach Anspruch 6 oder Anspruch 7, **dadurch gekennzeichnet, daß** ein Kamin (10) auf dem Kanal (1) installiert ist.

9. Vorrichtung nach einem der Ansprüche 6 bis 8, **dadurch gekennzeichnet, daß** sie mindestens mit einer Sprudeleinrichtung ausgestattet ist.

## Claims

1. Method for recycling waste products (9) in an assembly for producing mineral wool by means of a technique for forming fibres from a molten vitreous material, this assembly comprising at least one distribution channel (1) for the vitreous material, **characterised in that** the waste products (9) are constituted by materials whose volatility, combustion or melting temperature is, at the most, equal to the melting temperature of the mineral wool, and constitute fragments which are introduced into the distribution channel (1).

2. Method according to claim 1, **characterised in that** the waste products (9) are based on mineral wool.

3. Method according to claim 1 or claim 2, **characterised in that** the introduction into the channel (1) is carried out in a zone in which the temperature of the vitreous material is at least 1000°C.

4. Method according to any one of the preceding claims, **characterised in that** the fragments of waste products (9) have dimensions of a maximum of 10 cm.

5. Method according to any one of the preceding claims, **characterised in that** the proportion by weight of recycled waste products (9) is in the order of 4%.

6. Device for recycling waste products (9) in an assembly for producing mineral wool by means of a technique for forming fibres from a molten vitreous material, this assembly comprising at least one distribution channel (1) for the vitreous material, the device comprising a hopper (5) which is arranged in the upstream portion of the channel, this hopper being provided with a pressure-separating supply system, **characterised in that** the supply system comprises a chamber (6) which is in particular provided with stoppers (7, 8).

7. Device for recycling waste products (9) in an assembly for producing mineral wool by means of a technique for forming fibres from a molten vitreous material, this assembly comprising at least one distribution channel (1) for the vitreous material, the device comprising a hopper (5) which is arranged in the upstream portion of the channel, this hopper being provided with a pressure-separating supply system, **characterised in that** the pressure-separating means is constituted by the waste products (9) themselves.

8. Device according to claim 6 or claim 7, **characterised in that** it comprises a chimney (10) which is arranged on the channel (1).

9. Device according to any one of claims 6 to 8, **characterised in that** it is provided with at least one boiler.
